# EUROPEAN PATENT APPLICATION

(11) **EP 4 772 354 A1**
(43) Date of publication of application: **08.07.2026**
(21) Application number: 23956646.6
(22) Date of filing: 06.12.2023
(51) Int. Cl.: B41J 2/175

(54) **VERIFICATION RESPONSE METHOD OF CONSUMABLE CHIP AND VERIFICATION METHOD FOR CONSUMABLE CONTAINER**

(30) Priority: 27.10.2023 CN 202311414135
(71) Applicant: Zhuhai Print-Rite Microelectronics Corporation, Zhuhai, Guangdong 519060 (CN)
(72) Inventor: WEN, Guanguo, Zhuhai, Guangdong 519060 (CN); LUO, Shoujie, Zhuhai, Guangdong 519060 (CN); CHE, Zhiliu, Zhuhai, Guangdong 519060 (CN)
(74) Representative: Murgitroyd & Company
(86) International application number: PCT/CN2023/136774
(87) International publication number: WO 2025/086410

(57) **Abstract**

A verification response method for a consumable chip and a verification method for a consumable container are provided. The verification response method for the consumable chip includes: A consumable chip receives a verification instruction; determines a verification time period of a verification response signal according to the verification instruction, and determines a verification level of each verification time period; and in a verification time period in which an initial verification level is a high level, maintains a voltage of a data signal line above a threshold voltage determined as a high level; and/or sets a high-impedance state in at least one verification time period in which an initial verification level is a low level. Therefore, logic control of the consumable chip can be simpler, implementation difficulty of the consumable chip can be reduced, and production costs of the consumable chip can be reduced.

## Description

### TECHNICAL FIELD

The present invention relates to the technical field of printing devices, and specifically, to a verification response method for a consumable chip on a printing device, and further to a verification method for a consumable container.

### BACKGROUND

As a common office device, a printing device provides great convenience for modern office. Common printing devices are classified into an ink jet printing device and a laser printing device. The ink jet printing device uses an ink cartridge containing ink as a consumable container to spray ink onto paper, to form text or a pattern that needs to be printed on the paper. The laser printing device uses a toner cartridge containing toner as a consumable container to form text or a pattern that needs to be printed on a medium.

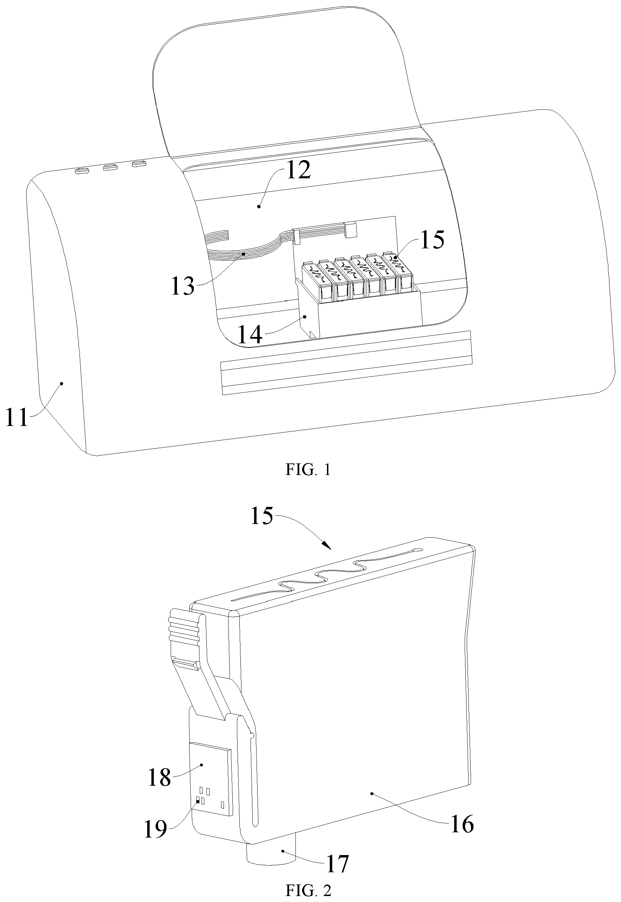

Referring to FIG. 1, an existing color ink jet printing device has a housing 11. The ink jet printing device shown in FIG. 1 omits a support plate of the housing 11. A core 12 of the ink jet printing device is disposed in the housing 11, and a slide bar is disposed. Driven by a motor (not visible in FIG. 1), a printing carriage 14 reciprocates along the slide bar. A main control circuit board (not visible in FIG. 1) is disposed in the printing carriage 14, and the main control circuit board communicates with the core 12 via a flat cable 13.

Multiple ink cartridges 15 are detachably installed on the printing carriage 14, and different ink cartridges 15 contain ink of different colors. A structure of the ink cartridge 15 is shown in FIG. 2. The ink cartridge 15 has a body 16, and the body 16 encloses a cavity for containing ink. An ink outlet 17 is disposed at a lower end of the cavity, and the ink in the cavity flows out through the ink outlet 17, and is supplied to an ink supply needle of the printing carriage 14.

A chip 18 is installed on an outer wall of the box 16 of the ink cartridge 15, and the chip 18 has a substrate. Multiple connection terminals 19 are disposed on a side of the substrate, and are configured to be electrically connected to a stylus on the printing carriage 14. A memory (not visible in FIG. 2) is disposed on the other side of the substrate. Generally, the memory is a non-volatile memory, such as an EEPROM or a FLASH, and stores information related to the ink cartridge, including variable information and invariable information, where the variable information is information that changes continuously with a printing operation, such as an amount of remaining ink, printing duration, and a printing paper quantity, and the invariable information is information that does not change with the printing operation, such as an ink cartridge model, an applicable ink jet printing device model, and an ink color.

After the ink cartridge 15 is installed on the printing carriage 14 of the ink jet printing device, the ink jet printing device powers on the chip 18, reads data stored in the memory of the chip 18, and determines whether the ink cartridge 15 is of a proper model and whether an amount of remaining ink in the ink cartridge 15 is sufficient. The ink jet printing device can perform a printing operation only when determining that the ink cartridge 15 is of the proper model and there is sufficient ink in the ink cartridge 15.

The multiple ink cartridges 15 are usually installed on the printing carriage 14, and installation statuses of all ink cartridges 15 may be different. For example, some ink cartridges have been installed correctly, and some other ink cartridges may not be installed correctly and fail to communicate with the ink jet printing device. Therefore, the ink jet printing device needs to perform verification on each ink cartridge 15, for example, detect whether the ink cartridges are installed correctly. Generally, the ink jet printing device needs to send a verification instruction to each ink cartridge. After receiving the verification instruction, the ink cartridge needs to respond within specified time, that is, send a correct verification response signal in a specified verification time period. The ink jet printing device determines, only when receiving, in the specified verification time period of each ink cartridge, the correct verification response signal sent by the ink cartridge, that the ink cartridge has been installed correctly, and then performs a subsequent communication operation. If the ink jet printing device considers that an ink cartridge is not installed correctly, the ink jet printing device sends alarm information, cannot perform a subsequent communication operation, and cannot perform a printing operation.

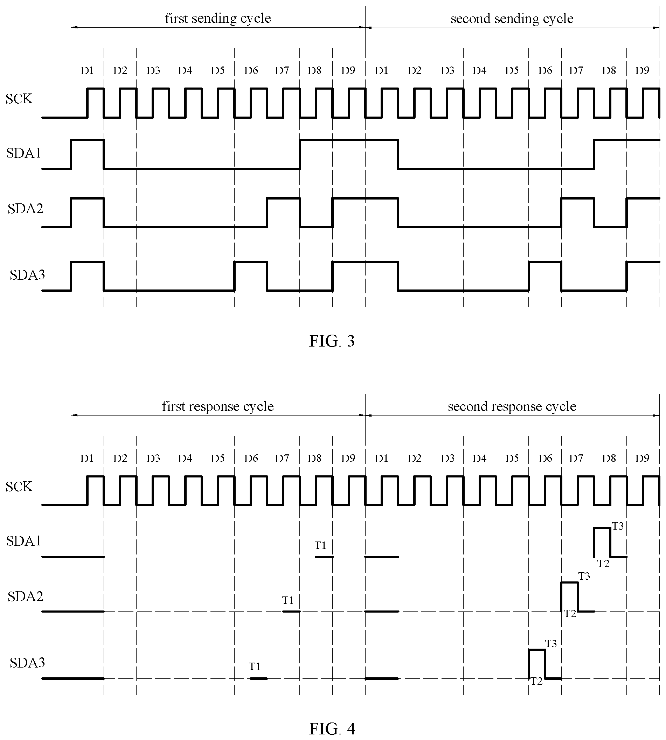

When communicating with each ink cartridge, an existing ink jet printing device sends a clock signal via a clock signal line. Referring to FIG. 3, a clock signal SCK is a periodically changed square-wave signal, and each ink cartridge chip performs synchronous communication with the ink jet printing device according to the clock signal SCK. When sending the verification instruction, the ink jet printing device sends a same level signal on a data signal line SDA in two consecutive sending cycles, and each sending cycle includes nine clock cycles. For example, a first sending cycle includes nine clock cycles D1 to D9, and a second sending cycle also includes nine clock cycles D1 to D9. In the first sending cycle, for a first color ink cartridge, when the ink jet printing device sends a verification instruction, a data signal SDA1 sent to the data signal line includes high-level signals in the first clock cycle D1, an eighth clock cycle D8, and a ninth clock cycle D9, and a low-level signal in another clock cycle. In the second sending cycle, the ink jet printing device also sends high-level signals in the first clock cycle D1, the eighth clock cycle D8, and the ninth clock cycle D9, and sends a low-level signal in another clock cycle. When the first color ink cartridge receives the high-level signals in the three corresponding clock cycles D1, D8, and D9 in the two consecutive sending cycles, it is considered that the ink jet printing device sends the verification instruction for the first color ink cartridge to the first color ink cartridge, and the verification response signal needs to be sent in a specified verification time period.

Referring to FIG. 4, in an existing technical solution, verification time periods corresponding to the first color ink cartridge are a last half of an eighth clock cycle in a first response cycle and all time periods of an eighth clock cycle in a second response cycle. Based on a half of a clock cycle, verification time periods corresponding to a first ink cartridge may include three verification time periods, which are respectively verification time periods T1, T2, and T3, where the verification time period T1 is the last half of the eighth clock cycle in the first response cycle, the verification time period T2 is a first half of the eighth clock cycle in the second response cycle, and the verification time period T3 is a last half of the eighth clock cycle in the second response cycle.

It may be learned from FIG. 4 that, the ink cartridge needs to output the low-level signal to the data signal line in the first verification time period T1, the ink cartridge needs to output the high-level signal to the data signal line in the second verification time period T2, and the ink cartridge needs to output the low-level signal to the data signal line in the third verification time period T3. In another time period, because the ink jet printing device does not detect a level status of the data signal line SDA1, the ink cartridge may not output a level to the data signal line. In this case, the data signal line presents a high-impedance state, that is, a part shown in a dashed line in FIG. 4. If the ink cartridge cannot output a corresponding level signal in the foregoing manner, the ink jet printing device considers that the ink cartridge is not installed correctly, and a subsequent communication operation is affected.

For a second color ink cartridge, a verification instruction sent by the ink jet printing device is high-level signals sent in first clock cycles D1, seventh clock cycles D7, and ninth clock cycle D9 in a first sending cycle and a second sending cycle of a data signal SDA2. Three verification time periods T1, T2, and T3 of the second color ink cartridge are a last half of a seventh clock cycle in a first response cycle, a first half of a seventh clock cycle in a second response cycle, and a last half of the seventh clock cycle in the second response cycle respectively. Level signals of the three verification time periods are at a low level, a high level, and a low level respectively.

Likewise, for a third color ink cartridge, a verification instruction sent by the ink jet printing device is high-level signals sent in first clock cycles D1, sixth clock cycles D6, and ninth clock cycle D9 in a first sending cycle and a second sending cycle of a data signal SDA3. Three verification time periods T1, T2, and T3 of the third color ink cartridge are a last half of a sixth clock cycle in a first response cycle, a first half of a sixth clock cycle in a second response cycle, and a last half of the sixth clock cycle in the second response cycle respectively. Likewise, level signals of the three verification time periods are at a low level, a high level, and a low level respectively.

A response cycle of each color ink cartridge is immediately after the second sending cycle of the ink jet printing device, that is, a next cycle after the second sending cycle is the first response cycle of the ink cartridge. Therefore, each ink cartridge needs to respond within very short time, and processing time of the ink cartridge chip is very short. In addition, verification levels sent by the ink cartridge chip in the two response cycles are different. Therefore, the ink cartridge chip needs to have a relatively strong processing capability, and can respond to the verification instruction of the ink jet printing device within very short time. To meet this requirement, a processor with relatively high performance needs to be configured or a complex logic circuit needs to be disposed on the ink cartridge chip. This increases implementation difficulty of the ink cartridge chip and increases production costs of the ink cartridge chip.

### TECHNICAL PROBLEMS

A first objective of the present invention is to provide a verification response method for a consumable chip to reduce implementation difficulty of an ink cartridge chip and reduce production costs.

A second objective of the present invention is to provide a verification method for a consumable container to which the verification response method for the consumable chip is applied.

### TECHNICAL SOLUTIONS

To implement the foregoing first objective, the verification response method for the consumable chip provided in the present invention includes: A consumable chip receives a verification instruction; determines a verification time period of a verification response signal according to the verification instruction, and determines a verification level of each verification time period; and in a verification time period in which an initial verification level is a high level, maintains a voltage of a data signal line above a threshold voltage determined as a high level; and/or sets a high-impedance state in at least one verification time period in which an initial verification level is a low level.

In a preferred solution, there are two verification time periods in which the initial verification level is the low level; and a low-level signal is output in a first verification time period in which the initial verification level is the low level, and the high-impedance state is set in a second verification time period in which the initial verification level is the low level; or the high-impedance state is set in a first verification time period in which the initial verification level is the low level, and a low-level signal is output in a second verification time period in which the initial verification level is the low level; or the high-impedance state is set in a first verification time period in which the initial verification level is the low level, and the high-impedance state is also set in a second verification time period in which the initial verification level is the low level.

In a further solution, the verification time period in which the initial verification level is the high level is a time period of a first half clock cycle of the second verification time period in which the initial verification level is the low level.

In a further solution, a voltage of a clock signal line is reduced in a time period in which the high-impedance state is set. Further, the voltage of the clock signal line is reduced only in a time period in which the high-impedance state is set in the verification time period.

In a further solution, reducing the voltage of the clock signal line includes: reducing the voltage of the clock signal line to a level higher than the threshold voltage of the high level.

Another verification response method for a consumable chip provided in the present invention includes: a consumable chip receives a verification instruction; and determines a verification time period of a verification response signal according to the verification instruction, and determines a verification level of each verification time period, where the verification time period includes two groups of verification time periods, a first group of verification time periods is located in a first response cycle, a second group of verification time periods is located in a second response cycle, an initial verification level in the first group of verification time periods is a low-level signal, an initial verification level in a first verification time period of the second group of verification time periods is a high-level signal, and an initial verification level in a second verification time period of the second group of verification time periods is a low-level signal; and the method includes: outputting the high-level signal in half a clock cycle before the first group of verification time periods, outputting the low-level signal or a high-impedance state in the first group of verification time periods, outputting the high-level signal in the first verification time period of the second group of verification time periods, and outputting the low-level signal or the high-impedance state in the second verification time period of the second group of verification time periods.

In a preferred solution, a time period of the first group of verification time periods in the first response cycle matches a time period of the second verification time period of the second group of verification time periods in the second response cycle. The method includes: a level signal output in the first response cycle is the same as a level signal output in the second response cycle.

Another verification response method for a consumable chip provided in the present invention includes: a consumable chip receives a verification instruction; and determines a verification time period of a verification response signal according to the verification instruction, and determines a verification level of each verification time period, where the verification time period includes two groups of verification time periods, a first group of verification time periods is located in a first response cycle, a second group of verification time periods is located in a second response cycle, an initial verification level in the first group of verification time periods is a low-level signal, an initial verification level in a first verification time period of the second group of verification time periods is a high-level signal, and an initial verification level in a second verification time period of the second group of verification time periods is a low-level signal; and the method includes: after a first clock cycle of the second response cycle, outputting the high-level signal to a data signal line before the first verification time period of the second group of verification time periods arrives, and enabling a voltage of the data signal line to be maintained, in the first verification time period of the second group of verification time periods, above a threshold voltage determined as a high level.

In a preferred solution, after the first clock cycle of the second response cycle, the high-level signal is continuously output to the data signal line before the first verification time period of the second group of verification time periods arrives, until an end moment of the second verification time period of the second group of verification time periods.

In an optional solution, after the first clock cycle of the second response cycle, the high-level signal is output to the data signal line, and before the first verification time period of the second group of verification time periods arrives, the data signal line is set to a high-impedance state, until an arrival moment of the second verification time period of the second group of verification time periods.

In an optional solution, after the first clock cycle of the second response cycle, the high-level signal is output to the data signal line, and before the first verification time period of the second group of verification time periods arrives, the data signal line is set to a high-impedance state, until the second verification time period of the second group of verification time periods ends.

To implement the foregoing second objective, a verification method for a consumable container provided in the present invention includes: a printing device sends a verification instruction to at least one consumable container; after receiving the verification instruction, a consumable chip of the consumable container performs the verification response method for the consumable chip; and after receiving a verification response signal sent by the consumable chip, the printing device determines a status of the consumable container according to the received verification response signal.

In a preferred solution, there are at least two containers, and corresponding verification time periods in response cycles corresponding to the consumable chips are different.

### BENEFICIAL EFFECTS

According to a first solution provided in the present invention, in an SPI bus used by an ink jet printing device, a data signal line has a pull-down resistor, that is, the data signal line is grounded by using a pull-down resistor with a very large resistance value. Therefore, when the data signal line is set to a high-impedance state, the data signal line actually presents a low-level state. By using this feature, the high-impedance state is set in a verification time period in which an initial verification level is a low level, so that the verification time period in which the initial verification level is the low level presents the low-level state, and a verification requirement of the ink jet printing device on a consumable chip can also be met.

In addition, in a non-verification time period of a response cycle, the consumable chip should also set the data signal line to the high-impedance state. Therefore, in the entire response cycle, the consumable chip is set to only two states: high-level signal output and the high-impedance state, and does not need to output a low-level signal. Therefore, an output state type set for the consumable chip can be simplified, so that logic control of the consumable chip is simpler, implementation difficulty of the consumable chip is reduced, and production costs of the consumable chip are reduced.

Moreover, in the present invention, the low-level signal is output only in one verification time period in which the initial verification level is the low level, and the high-impedance state is set in the other verification time period in which the initial verification level is the low level, so that the control logic of the consumable chip is simple.

In a first response cycle, the consumable chip may be set to output in the high-impedance state, so that the consumable chip outputs a signal in a non-high-impedance state only in a verification time period of a second response cycle, and the consumable chip can have more time to perform signal response processing.

When the data signal line is in the high-impedance state, because a clock signal of a clock signal line exists, a pulse signal with a relatively small voltage amplitude is induced on the data signal line. To reduce interference caused by the pulse signal, an amplitude of the induced pulse signal may be relatively small by reducing a voltage of the clock signal, to avoid impact on detection of the ink jet printing device.

In another solution, although a voltage of the clock signal line is reduced, but is still higher than a threshold voltage of a high level, and an ink cartridge and the ink jet printing device can still identify the high level and the low level of the clock signal, to meet a synchronization requirement of communication between the ink jet printing device and the ink cartridge.

In addition, the high-level signal is also output in half a clock cycle before a first group of verification time periods, so that a high-level signal and a low-level signal are output in clock cycles corresponding to the two response cycles in verification time periods, that is, level signals output in the two response cycles are completely the same, and the control logic of the consumable chip is very simple.

In another solution, before an arrival moment of a second verification time period, a level of the data signal line is set to the high level in advance, and no monitoring is required for the arrival moment of the second verification time period, so that two times of level switching completed within very short time can be reduced, a calculation requirement of a controller can be reduced, and production costs of the consumable chip can be reduced.

Each consumable chip sends a verification level in a manner of the present invention. After receiving the verification level, a printing device can determine whether the received verification level is correct, to complete verification on a consumable container.

Because corresponding verification time periods in response cycles corresponding to consumable chips are different, the printing device may determine, according to a time period in which each consumable chip sends the verification level, whether the consumable chip correctly responds to a signal sent by the ink jet printing device, to implement verification on multiple consumable containers.

### BRIEF DESCRIPTION OF DRAWINGS

FIG. 1 is a structural diagram of an existing ink jet printing device;
FIG. 2 is a structural diagram of an existing ink cartridge;
FIG. 3 is a waveform timing diagram of sending a verification instruction by an existing ink jet printing device;
FIG. 4 is a waveform timing diagram of sending a verification response signal by an existing consumable chip;
FIG. 5 is a waveform timing diagram of sending a verification response signal by a consumable chip in a first embodiment of a verification response method for a consumable chip according to the present invention;
FIG. 6 is a waveform timing diagram of sending a verification response signal by a consumable chip in a second embodiment of a verification response method for a consumable chip according to the present invention;
FIG. 7 is a waveform timing diagram of sending a verification response signal by a consumable chip in a third embodiment of a verification response method for a consumable chip according to the present invention;
FIG. 8 is a waveform timing diagram of sending a verification response signal by a consumable chip in a fourth embodiment of a verification response method for a consumable chip according to the present invention;
FIG. 9 is a waveform timing diagram of sending a verification response signal by a consumable chip in a fifth embodiment of a verification response method for a consumable chip according to the present invention;
FIG. 10 is a schematic circuit diagram of a consumable chip in a sixth embodiment of a verification response method for a consumable chip according to the present invention;
FIG. 11 is a waveform timing diagram of sending a verification response signal by a consumable chip in a sixth embodiment of a verification response method for a consumable chip according to the present invention;
FIG. 12 is a waveform timing diagram of sending a verification response signal by a consumable chip in a seventh embodiment of a verification response method for a consumable chip according to the present invention; and
FIG. 13 is a waveform timing diagram of sending a verification response signal by a consumable chip in an eighth embodiment of a verification response method for a consumable chip according to the present invention.

The following further describes the present invention with reference to the accompanying drawings and embodiments.

### IMPLEMENTATIONS OF THE PRESENT INVENTION

A verification response method for a consumable chip in the present invention may be applied to a printing device such as an ink jet printing device or a laser printing device. For example, a consumable chip is an ink cartridge chip installed on a side wall of an ink cartridge, and multiple ink cartridge chips may be installed on the ink jet printing device. Preferably, a serial bus is used for communication between the ink jet printing device and the ink cartridge chip.

### First embodiment:

A consumable container in this embodiment is an ink cartridge detachably installed to an ink jet printing device. An ink cartridge chip is disposed as a consumable chip on the ink cartridge, and multiple connection terminals are disposed on one surface of the ink cartridge chip, such as a clock terminal, a data terminal, a power terminal, a chip selection terminal, and a ground terminal. A stylus holder is disposed on a printing carriage of the ink jet printing device, multiple styluses are disposed on the stylus holder, and the connection terminal of the ink cartridge chip may be electrically connected to the stylus. The ink jet printing device communicates with multiple ink cartridge chips in a serial manner via an SPI bus. For example, a clock signal line and a data signal line are provided for a serial bus, the ink jet printing device outputs a clock signal SCK to the clock signal line, and each ink cartridge chip receives the clock signal via a respective clock terminal and performs synchronous communication with the ink jet printing device based on the clock signal.

In addition, a data signal is transmitted between each color ink cartridge chip and the ink jet printing device via a data signal line. For example, a data signal between the ink jet printing device and a first color ink cartridge is SDA1, a data signal between the ink jet printing device and a second color ink cartridge is SDA2, a data signal between the ink jet printing device and a third color ink cartridge is SDA3, and so on.

It should be noted that SDA1, SDA2, and SDA3 may be a same data signal line. SDA1, SDA2, and SDA3 in the figure represent signals on the data signal line in different time periods. That is, a signal for communication between the ink jet printing device and the first color ink cartridge on the data signal line in a first time period is SDA1. Similarly, a signal for communication between the ink jet printing device and the second color ink cartridge on the data signal line in a second time period is SDA2, and a signal for communication between the ink jet printing device and the third color ink cartridge on the data signal line in a third time period is SDA3. In addition, SDA1, SDA2, and SDA3 may be different data signal lines. Different color ink cartridges are connected to the ink jet printing device via different data signal lines. The ink jet printing device synchronously/asynchronously communicates with the different color ink cartridges.

After the ink cartridges are installed on the printing carriage, the ink jet printing device needs to verify an installation status of each ink cartridge, that is, determine whether each ink cartridge is correctly installed. Specifically, the ink jet printing device sends a verification instruction to each ink cartridge chip, for example, sends a high-level signal in a preset clock cycle of a first sending cycle, and sends a high-level signal in a preset clock cycle of a second sending cycle. Generally, the preset clock cycles of the two sending cycles are the same. As shown in FIG. 3, for a first color ink cartridge chip, a preset clock cycle is an eighth clock cycle D8; for a second color ink cartridge chip, a preset clock cycle is a seventh clock cycle D7, and so on.

After receiving the corresponding verification instruction, the ink cartridge chip needs to respond within specified time, that is, output a verification response signal to the ink jet printing device. As described above, the first color ink cartridge needs to output a low-level signal in a last half of an eighth clock cycle D8 of a first response cycle, output a high-level signal in a first half of the eighth clock cycle D8 of a second response cycle, and output the low-level signal in a last half of an eighth clock cycle D8 of the second response cycle.

Therefore, the ink cartridge chip needs to determine, according to the received verification instruction, a verification time period corresponding to the current verification instruction. For example, the last half of the eighth clock cycle D8 of the first response cycle is a first verification time period T1, the first half of the eighth clock cycle D8 of the second response cycle is a second verification time period T2, and the last half of the eighth clock cycle D8 of the second response cycle is a third verification time period T3.

In addition, the ink cartridge chip further needs to determine a verification level of each verification time period. For example, the low-level signal should be output in the first verification time period T1, the high-level signal should be output in the second verification time period T2, and the low-level signal should be output in the third verification time period T3. Therefore, the first verification time period T1 and the third verification time period T3 are verification time periods in which an initial verification level is a low level, and the second verification time period T2 is a verification time period in which an initial verification level is a high level. In time periods of the first response cycle and the second response cycle, the ink jet printing device does not detect a signal on the data signal line. Therefore, the ink cartridge chip may not load any signal to the data signal line. In this case, the data signal line presents a high-impedance state. However, there is a very large resistor between the data signal line and the ground. When the ink cartridge chip does not load a level to the data signal line, the data signal line usually presents a low-level state.

A verification level requirement of the verification response signal for each verification time period is complex. For example, verification levels corresponding to the first response cycle and the second response cycle are different, and the first response cycle is a next cycle of the second sending cycle, that is, after receiving the verification instruction, the ink cartridge chip needs to immediately respond, which poses a very high requirement for control logic of the ink cartridge chip.

It should be noted that, when the ink jet printing device is in first clock cycles D1 of the first response cycle and the second response cycle, the ink jet printing device applies the low-level signal to the data signal line, to indicate a start of the first response cycle or the second response cycle.

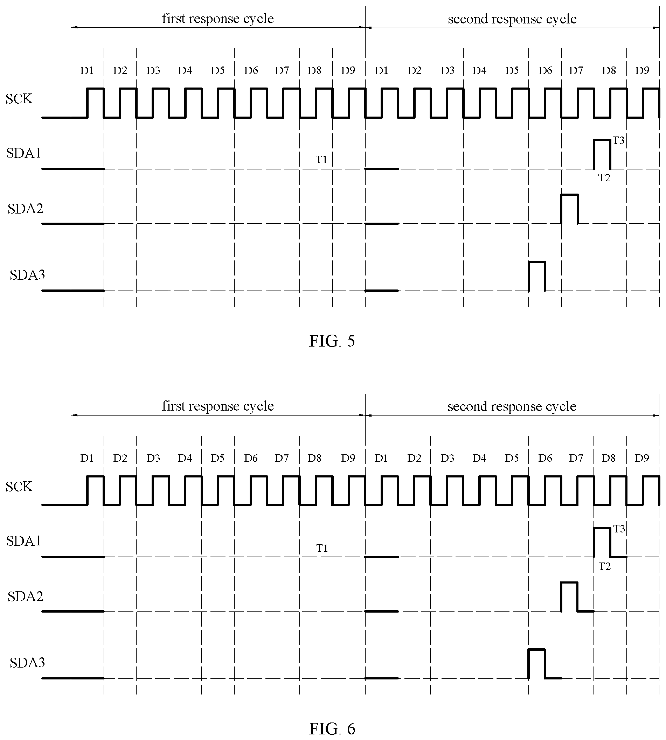

To simplify control logic, referring to FIG. 5, in this embodiment, a high-impedance state is output in a verification time period in which an initial verification level is a low level, that is, both a first verification time period T1 and a third verification time period T3, and a high-level signal is output only in a verification time period in which an initial verification level is a high level, that is, only in a second verification time period T2. The high-level signal output by the ink cartridge chip may be understood as that a voltage of the data signal line is maintained above a threshold voltage determined by the ink jet printing device as a high level. In this way, when the ink jet printing device performs verification on the ink cartridge chip, the low-level signal is received in the first verification time period T1, the high-level signal is received in the second verification time period T2, and the low-level signal is received in the third verification time period T3, which is considered that the ink cartridge is correctly installed, and the ink cartridge is successfully verified.

Likewise, for a second ink cartridge, verification time periods are in seventh clock cycles D7 of the first response cycle and the second response cycle respectively, and the high-impedance state is output only in a second verification time period T2, and other time periods of the first response cycle and the second response cycle are all in the high-impedance state. A third ink cartridge is also processed in a same manner.

In this way, the ink cartridge chip does not need to perform any operation in the first response cycle, only needs to output the high level in the second verification time period T2 of the second response cycle, and does not need to output any digital signal in another time period, that is, is configured to the high-impedance state. Control logic of the ink cartridge chip is very simple, and a requirement for an operation capability of the ink cartridge chip is relatively low. If the logic control is implemented by using a logic circuit, implementation difficulty of the logic circuit can be simplified, and production costs of the ink cartridge chip can be reduced.

### Second embodiment:

Referring to FIG. 6, different from the first embodiment, in this embodiment, a low-level signal is output in a third verification time period T3 of a second response cycle, and a high-impedance state is output in a first verification time period T1 of a first response cycle. In this way, an ink jet printing device receives a low-level signal, a high-level signal, and a low-level signal in three verification time periods T1, T2, and T3 respectively, and an ink cartridge chip can be successfully verified.

It can be learned from FIG. 6 that the ink cartridge chip is in the high-impedance state in all time periods of the first response cycle, that is, does not need to output a signal to a data signal line, and only needs to sequentially output the high-level signal and the low-level signal in an eighth clock cycle D8 of the second response cycle, that is, outputs the high-level signal only in the second verification time period T2 and outputs the low-level signal in the third verification time period T3. In this way, after receiving a verification instruction, the ink cartridge chip has relatively long response time, and does not need to perform any processing in the first response cycle. This has a relatively low requirement for operating performance of the ink cartridge chip, logic control is also simplified, difficulty in implementing logic control of the ink cartridge chip can be reduced, thereby facilitating a reduction in production costs of the ink cartridge chip.

In addition, a low level is output in the third verification time period T3. Compared with outputting the high-impedance state in the third verification time period T3, charges remaining on a data signal line in the second verification time period T2 can be eliminated in time, to avoid a case in which the high-impedance state is output by the chip in the third verification time period T3 but is incorrectly considered as a high level by the ink jet printing device.

Certainly, in another implementation, the low-level signal may be output in the first verification time period T1, and the high-impedance state is set in the third verification time period T3. The ink cartridge chip can also be successfully verified by the ink jet printing device.

### Third embodiment:

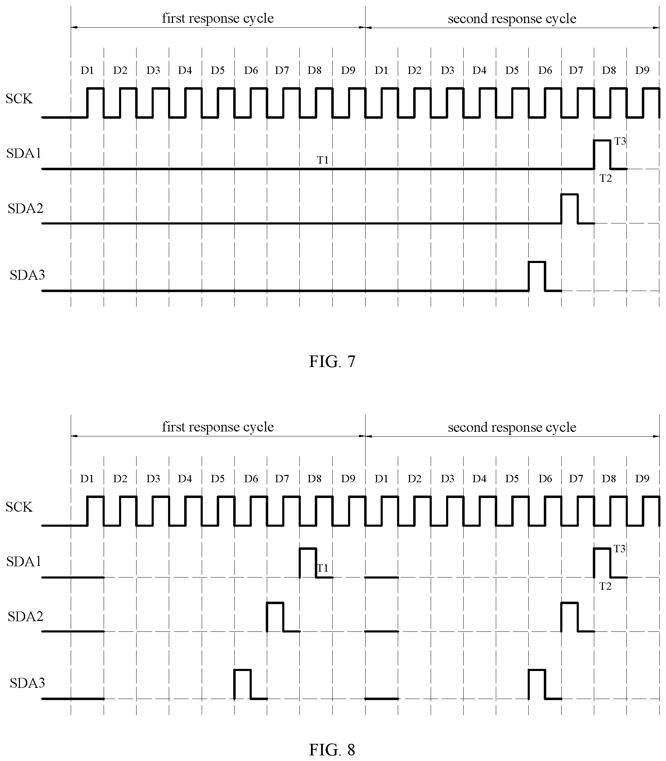

Referring to FIG. 7, different from the second embodiment, in this embodiment, before a second verification time period T2, an ink cartridge chip always outputs a low-level signal to a data signal line, outputs a high-level signal in the second verification time period T2, outputs the low-level signal in a third verification time period T3, and after the third verification time period T3 ends, may output the low-level signal or may be set to a high-impedance state. In this way, an ink jet printing device receives a low-level signal, a high-level signal, and a low-level signal in three verification time periods T1, T2, and T3 respectively, and an ink cartridge chip can be successfully verified.

It may be understood that, in this embodiment, three verification time periods are classified into two groups. A first group of verification time periods is verification time periods of a first response cycle, that is, the verification time period T1, and a second group of verification time periods is verification time periods of a second response cycle, that is, the verification time periods T2 and T3. Therefore, an initial verification level in the first group of verification time periods is the low-level signal, an initial verification level in a first verification time period of the second group of verification time periods is the high-level signal, and an initial verification level in a second verification time period of the second group of verification time periods is the low-level signal.

It may be learned that, before the second verification time period T2, a signal output by the ink cartridge chip is fixed, that is, the low-level signal is always output, in other words, before the second group of verification time periods arrives, the ink cartridge chip always outputs the low-level signal to the data signal line. In this way, after a second sending cycle ends, the ink cartridge chip only needs to output the low-level signal in the entire first response cycle, and does not need to calculate which time period is the first verification time period T1, to reduce difficulty of logic control.

### Fourth embodiment:

Referring to FIG. 8, in this embodiment, signals output in a first response cycle and a second response cycle are the same. In this embodiment, three verification time periods are also classified into two groups. A first group of verification time periods is verification time periods of a first response cycle, that is, a verification time period T1, and a second group of verification time periods is verification time periods of a second response cycle, that is, verification time periods T2 and T3. In addition, a time period of the first group of verification time periods in the first response cycle matches a time period of the second verification time period of the second group of verification time periods in the second response cycle. In other words, the first group of verification time periods is in an eighth clock cycle D8 of the first response cycle, and the second verification time period of the second group of verification time periods is also in an eighth clock cycle D8 of the second response cycle.

Because a high-level signal and a low-level signal need to be separately output in the second group of verification time periods, the high-level signal needs to be output in one clock cycle before the first group of verification time periods, that is, the high-level signal is output in a first half of the eighth clock cycle D8 of the first response cycle, and the low-level signal is output in the first verification time period T1. In addition, the high-level signal is output in the first verification time period T2 of the second group of verification time periods, and the low-level signal is output in the second verification time period T3 of the second group of verification time periods.

It can be learned from FIG. 8 that signals output by an ink cartridge chip to a data signal line in the first response cycle and the second response cycle are the same, and the high-level signal and the low-level signal are respectively output in two time periods of the eighth clock cycle D8. In this way, the level signals output by the ink cartridge chip in the two response cycles are the same. Only a same rule needs to be used to output the level signals, and control logic is relatively simple.

Certainly, in another implementation, a high-impedance state may be output in the first verification time period T1 of the first response cycle. Correspondingly, the high-impedance state may also be output in the second verification time period T3 of the second response cycle.

### Fifth embodiment:

Because a clock signal line and a data signal line in an SPI bus are adjacent, when the data signal line is in a high-impedance state, an interference signal is induced on the data signal line when a high-frequency pulse signal is formed on the clock signal line, and a frequency of the interference signal is the same as a frequency of the clock signal, but has a very low amplitude, for example, only 0.4 V. Because a threshold voltage of a high level of an ink jet printing device is usually higher than 1 V, the interference signal often does not affect a signal of the data signal line.

However, if the ink jet printing device is interfered by an external electromagnetic signal, an interference signal formed on the data signal line may be incorrectly identified by the ink jet printing device, that is, the interference signal is identified as a high-level signal. To avoid this case, in this embodiment, during a verification response performed by an ink cartridge chip, if the high-impedance state is output, a voltage of a clock signal is adjusted, for example, a voltage value of a high level of the clock signal is reduced within short time.

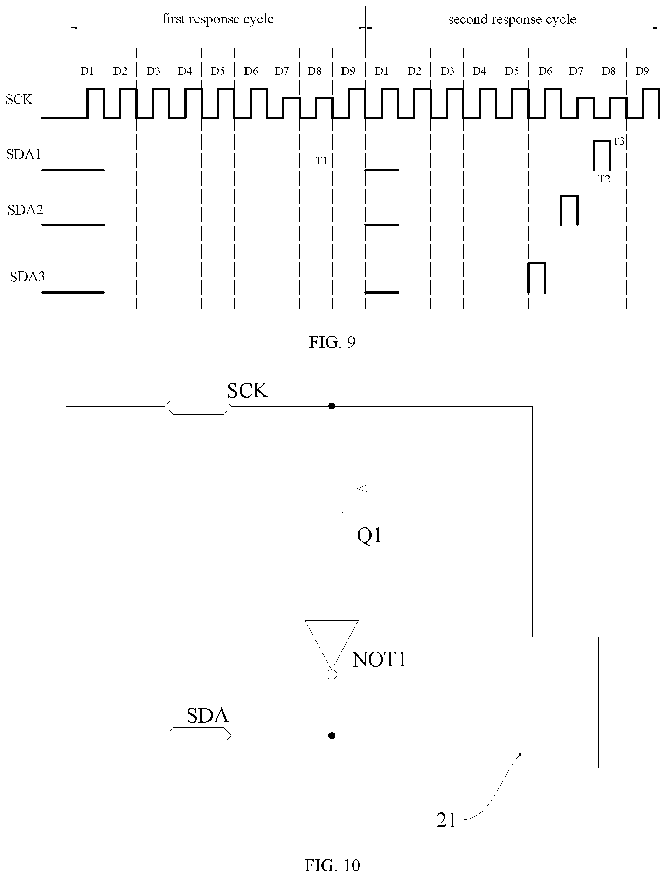

Referring to FIG. 9, in a normal case, a voltage of a clock signal SCK at a high level is 3.3 V, but in a verification time period in which a high-impedance state needs to be set, the voltage of the clock signal is reduced. For example, the voltage of the clock signal SCK is reduced at a peripheral moment of a first verification time period T1, for example, a previous clock cycle D7 and a current clock cycle D8 of the first verification time period T1. Likewise, the voltage of the clock signal SCK is reduced at a peripheral moment of a third verification time period T3, for example, a previous clock cycle D7 and a current clock cycle D8 of the third verification time period T3.

However, if the voltage of the clock signal is too low, the ink cartridge chip cannot identify the clock signal, and communication between an ink cartridge and the ink jet printing device is affected. To avoid this problem, a reduced voltage of the clock signal needs to be higher than the threshold voltage of the high level. For example, if the threshold voltage of the high level is 1.2 V, the reduced voltage of the clock signal at the high level is at least higher than 1.2 V, preferably 1.5 V. In this way, the ink cartridge chip can correctly identify the clock signal sent by the ink jet printing device, and can also avoid forming an interference signal with an excessive amplitude in the high-impedance state.

Certainly, in another embodiment, in the first response cycle and the second response cycle, the voltage of the clock signal is reduced in all time periods in which the high-impedance state needs to be set.

The voltage of the clock signal SCK at the high level may be reduced in multiple manners. For example, an LDO (low-dropout linear regulator) is connected to the clock signal line, so that a high-level voltage of 3.3 V is clamped to about 1.5 V. Many descriptions are provided in the prior art, and details are not described herein.

### Sixth embodiment:

Referring to FIG. 10, in an ink cartridge chip provided in this embodiment, a main control unit 21, a first MOS transistor Q1, and a first inverter NOT1 are disposed in a circuit that is responsible for responding to a verification instruction of an ink jet printing device, where a control end of the first MOS transistor Q1 is connected to the main control unit 21 of the ink cartridge chip, a drain of the first MOS transistor Q1 is connected to a clock signal line, a source of the first MOS transistor Q1 is connected to an input end of the first inverter NOT1, and an output end of the first inverter NOT1 is connected to a data signal line.

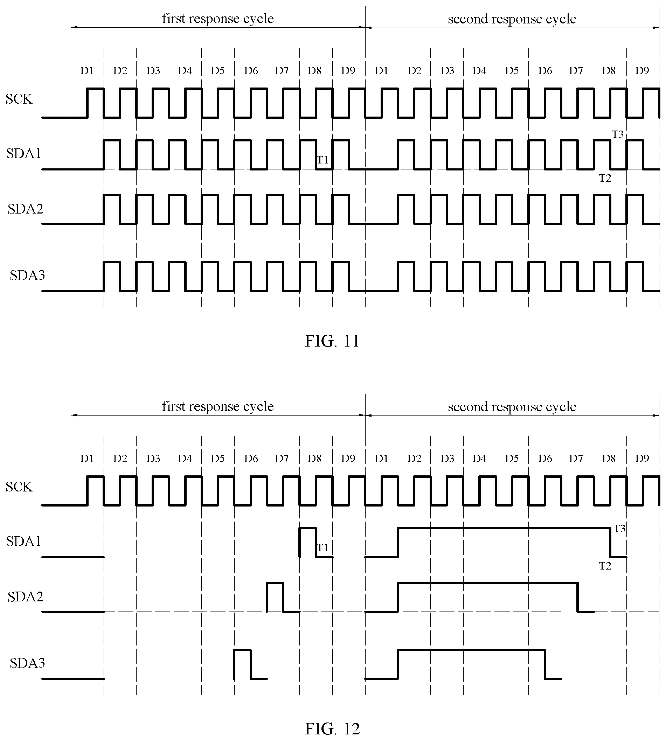

After receiving continuous verification instructions sent by the ink jet printing device, the ink cartridge chip controls the first MOS transistor Q1 to be in an on state. In this case, a signal on the clock signal line is inverted by using the first inverter NOT1 and then output to the data signal line. A timing diagram is shown in FIG. 11. It can be learned from FIG. 11 that, because the ink jet printing device outputs a low level in first clock cycles D1 of a first response cycle and a second response cycle, even if a high level is output by the inverter NOT1 during a last half of the first clock cycle D1, the ink jet printing device lowers the level, which finally becomes the timing diagram shown in FIG. 11.

The ink jet printing device detects a level of the data signal line only in specific verification time periods T1, T2, and T3 of a specific clock cycle, and does not detect a level of the data signal line at another moment. Therefore, in this embodiment, a signal on the clock signal line is inverted and then output to the data signal line, and a low-level signal, a high-level signal, and a low-level signal are respectively output in the three verification time periods T1, T2, and T3, and the ink cartridge chip can also be successfully verified by the ink jet printing device.

After the verification ends, that is, the second response cycle ends, the ink cartridge chip controls the first MOS transistor Q1 to be in an off state, the signal on the clock signal line is no longer inverted and then output to the data signal line. The ink cartridge chip starts to perform normal data communication with the ink jet printing device.

It should be noted that, the ink cartridge chip may select other moments to control the on state and the off state of the first MOS transistor Q1, for example, may set to turn on the first MOS transistor Q1 at any moment between clock cycles D2 to D8 of the first response cycle, or may set to turn off the first MOS transistor Q1 at any moment between the clock cycle D8 of the second response cycle and a next communication start.

In this way, the ink cartridge chip needs to set the first MOS transistor Q1 to the on state only after receiving the verification instruction sent by the ink jet printing device, and set the first MOS transistor Q1 to the off state after the second response cycle ends. No output operation needs to be performed in an intermediate time period. Control logic of the ink cartridge chip is very simple, and a requirement for an operation capability of the ink cartridge chip is relatively low. If logic control is implemented by using a logic circuit, implementation difficulty of the logic circuit can be simplified, and production costs of the ink cartridge chip can be reduced. Even if the ink jet printing device needs to detect installation statuses of all color ink cartridge chips in the two response cycles because of firmware upgrade, that is, all the color ink cartridge chips need to respond in each of verification time periods of corresponding D3 to D8 in the two response cycles, the ink cartridge chips provided in this embodiment can also be applied to the upgraded ink jet printing device.

### Seventh embodiment:

In the first embodiment, a high-level signal and a high-impedance state need to be separately output in a second group of verification time periods. For example, in an eighth clock cycle D8 of a second response cycle, a high-level signal needs to be output in a first half cycle and a high-impedance state needs to be output in a last half cycle. However, in a third verification time period T3, a signal collected by an ink jet printing device is not necessarily at a low level. This is because in the third verification time period T3, although a data signal line SDA slowly discharges under action of a pull-down resistor with a relatively large resistance value inside the ink jet printing device to enable a voltage of the data signal line SDA to gradually decrease, a voltage value is usually 3.3 V because a clock signal line CLK in the third verification time period T3 has a high-level signal. Therefore, a high-level state of the clock signal line CLK also affects a discharge effect of the data signal line SDA, and resistance values of pull-down resistors inside different ink jet printing devices are also different. As a result, a level state of the data signal line SDA in the third verification time period T3 may be unstable because of combined impact of these factors, and the signal collected by the ink jet printing device is not at the low level. Once the ink jet printing device considers that a low-level state is absent in the third verification time period T3, it is considered that an ink cartridge is not installed correctly.

In addition, in the second embodiment, the third embodiment, and the fourth embodiment, a high-level signal and a low-level signal need to be separately output in the second group of verification time periods. For example, in the eighth clock cycle D8 of the second response cycle, a high-level signal needs to be output in a first half cycle, and a low-level signal needs to be output in a last half cycle. In this way, for an ink cartridge chip that uses a single-chip microcomputer as a main controller, an installation detection instruction sent for the ink jet printing device is responded by using software. To be specific, after determining that a falling edge of a second verification time period T2 of a corresponding color arrives, the single-chip microcomputer outputs the high-level signal to the data signal line SDA; after outputting the high-level signal, needs to immediately determine whether a rising edge of a third verification time period T3 arrives; and after the rising edge of the third verification time period T3 arrives, outputs the low-level signal to the data signal line SDA. In other words, the single-chip microcomputer needs to monitor two edge signals in one clock cycle, perform two signal switching operations, and output two levels, which imposes a high requirement for an operating speed of the single-chip microcomputer.

To resolve the foregoing problem, in this embodiment, the high-level signal is output in advance before the second verification time period T2 arrives, and the low-level signal is output in the third verification time period T3. Specifically, referring to FIG. 12, after a first clock cycle D1 of the second response cycle, the high-level signal is output to the data signal line SDA1, and the high-level signal is maintained until an arrival moment of the third verification time period T3, that is, the high-level signal is maintained after the high level is output in the first clock cycle D1 and before the second verification time period T2 arrives, there is no need to monitor whether the falling edge of the second verification time period T2 arrives, only whether the rising edge of the third verification time period T3 arrives, and the low-level signal is output immediately after the rising edge of the third verification time period T3 arrives.

Therefore, in this embodiment, the high-level signal is output to the data signal line SDA1 in advance after the first clock cycle D1 of the second response cycle and before the second verification time period T2 arrives, and is maintained until an end moment of the second verification time period T2.

In this way, on the one hand, the low-level signal instead of the high-impedance state is output in the third verification time period T3, to avoid a case in which the ink jet printing device detects the high-level signal and considers that the ink cartridge is not correctly installed. On the other hand, the single-chip microcomputer does not need to monitor the falling edge and the rising edge of the two verification time periods T2 and T3 within very short time, and only needs to monitor the rising edge of the third verification time period T3. In addition, the level signal is switched only once in a time period of the eighth clock cycle D8, and a requirement for an operation speed of the single-chip microcomputer is relatively low, which can be implemented by using a low-cost single-chip microcomputer.

It should be noted that a moment for starting to output the high level in this embodiment may be any moment after the first clock cycle D1 of the second response cycle and before the second verification time period T2 arrives. A color BK of an ink cartridge chip is used as an example. Because the high-level signal needs to be detected in a first half of the eighth clock cycle D8 of the second response cycle, a moment at which the high-level signal is output may be any moment from a second clock cycle D2 to a seventh clock cycle D7 of the second response cycle provided that the high level is maintained until the rising edge of the eighth clock cycle D8 arrives.

### Eighth embodiment:

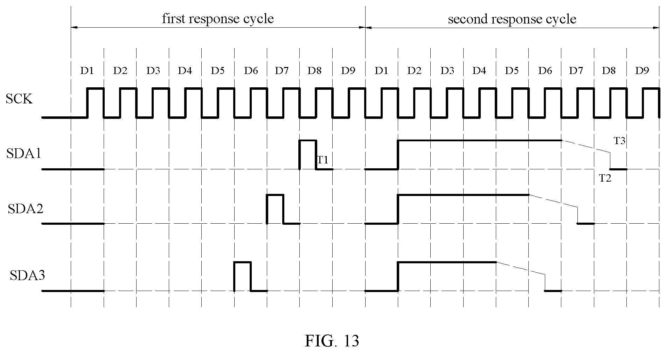

This embodiment is further improved based on the seventh embodiment. Specifically, referring to FIG. 13, after a first clock cycle D1 of a second response cycle, a high-level signal is output to a data signal line SDA1, but the high-level signal is not maintained until an arrival moment of a third verification time period T3, but is terminated before a second verification time period T2 arrives, and a high-impedance state is set. In addition, a state of the high-impedance state is maintained until the arrival moment of the third verification time period T3, that is, a low-level signal is output to the data signal line SDA1 immediately after it is detected that a rising edge of the third verification time period T3 arrives.

After the first clock cycle D1 of the second response cycle, the high-level signal is maintained on the data signal line for a period of time. After being converted into the high-impedance state, a voltage of the data signal line SDA1 does not immediately decrease, but gradually decreases with a discharge process, as shown in a dashed line in FIG. 13. Therefore, in the second verification time period T2, even if the data signal line is in the high-impedance state, because the data signal line SDA1 still has a relatively high voltage and is still higher than a high-level detection threshold of an ink jet printing device, for example, higher than 1.5 V, the ink jet printing device still detects the high-level signal and still considers that an ink cartridge has been installed correctly.

It should be noted that a moment for starting to output the high level in this embodiment may be any moment after the first clock cycle D1 of the second response cycle and before the second verification time period T2 arrives. A color BK of an ink cartridge chip is used as an example. Because the high-level signal needs to be detected in a first half of the eighth clock cycle D8 of the second response cycle, a moment at which the high-level signal is output may be any moment from a second clock cycle D2 to a seventh clock cycle D7 of the second response cycle. End time of the high level may be determined according to an actual measured circuit parameter, for example, a value is calculated according to parameters such as a resistance value of a pull-down resistor inside different models of ink jet printing devices and a capacitance value of a parasitic capacitor, to ensure that in the second verification time period T2, a voltage value collected by the ink jet printing device is greater than a threshold voltage. Preferably, before the second verification time period T2 arrives, output of the high-level signal is stopped at least 1/2 of a clock cycle in advance, and converted into an output of the high-impedance state. The high-impedance state may be maintained until an arrival moment of the third verification time period T3, that is, until an arrival moment of a second verification time period of a second group of verification time periods. In this way, the single-chip microcomputer can output the low-level signal at sufficient interval time in the third verification time period T3. Certainly, the high-impedance state may alternatively be maintained until the third verification time period T3 ends, that is, until the second verification time period of the second group of verification time periods ends.

In this way, the single-chip microcomputer does not need to monitor the falling edge and the rising edge of the two verification time periods T2 and T3 within very short time, and only needs to monitor the rising edge of the third verification time period T3. In addition, only the low-level signal needs to be output in the third verification time period T3 in the time periods of the eighth clock cycle D8, and a requirement for an operation speed of the single-chip microcomputer is relatively low, which can be implemented by using a low-cost single-chip microcomputer.

It should be noted that in this embodiment, a proper end moment of the high level may be selected according to an actual circuit parameter, so that the low-level signal does not need to be output in the third verification time period T3, but the current high-impedance state is maintained. To be specific, output of the high-level signal is terminated before the second verification time period T2 according to a discharge curve of the data signal line SDA1, so that in the second verification time period T2, a voltage of the data signal line SDA1 is maintained above the threshold voltage determined as the high level, and the ink jet printing device detects the high-level signal. However, in the third verification time period T3, a voltage of the data signal line SDA1 falls below the threshold voltage, so that the ink jet printing device detects the low-level signal. With reference to the manners used in Embodiment 1 to Embodiment 3, the high-impedance state is maintained in the first verification time period T1. In this way, the ink cartridge chip needs to output the high level only once before the second verification time period T2 in all response time periods for responding to the installation detection instruction of the ink jet printing device, to greatly simplify control logic.

It can be learned that in the present invention, response logic of the ink cartridge chip for the verification instruction can be simplified, and the ink cartridge chip can use simple control logic to respond to the verification instruction, to reduce implementation difficulty of the ink cartridge chip.

Finally, it should be emphasized that the foregoing is only a preferred embodiment of the present invention, and is not intended to limit the present invention. For a person skilled in the art, various changes and modifications may be made to the present invention. Any modification, equivalent replacement, improvement, or the like made within the spirit and principle of the present invention shall fall within the protection scope of the present invention.

### INDUSTRIAL APPLICABILITY

The verification response method for the consumable chip in the present invention is applied to a consumable chip, the consumable chip is installed on a consumable container, and the consumable container is detachably installed on a printing device. After receiving a verification instruction, the consumable chip in the present invention performs special response processing on the verification instruction, to simplify control logic of the consumable chip responding to the verification instruction, reduce difficulty in implementing the control logic of the consumable chip, and reduce production costs of the consumable chip.

## Claims

1. A verification response method for a consumable chip, comprising:
receiving, by a consumable chip, a verification instruction;
**characterized in that**,
determining a verification time period of a verification response signal according to the verification instruction, and determining a verification level of each verification time period; and
in a verification time period in which an initial verification level is a high level, maintaining a voltage of a data signal line above a threshold voltage determined as a high level; and/or
setting a high-impedance state in at least one verification time period in which an initial verification level is a low level.

2. The verification response method for the consumable chip according to claim 1, wherein,
there are two verification time periods in which the initial verification level is the low level; and
a low-level signal is output in a first verification time period in which the initial verification level is the low level, and the high-impedance state is set in a second verification time period in which the initial verification level is the low level; or
the high-impedance state is set in a first verification time period in which the initial verification level is the low level, and a low-level signal is output in a second verification time period in which the initial verification level is the low level; or
the high-impedance state is set in a first verification time period in which the initial verification level is the low level, and the high-impedance state is also set in a second verification time period in which the initial verification level is the low level.

3. The verification response method for the consumable chip according to claim 1 or 2, wherein,
the verification time period in which the initial verification level is the high level is a time period of a first half clock cycle of the second verification time period in which the initial verification level is the low level.

4. The verification response method for the consumable chip according to claim 1 or 2, wherein,
a voltage of a clock signal line is reduced in a time period in which the high-impedance state is set.

5. The verification response method for the consumable chip according to claim 4, wherein,
the voltage of the clock signal line is reduced only in a time period in which the high-impedance state is set in the verification time period.

6. The verification response method for the consumable chip according to claim 4, wherein,
reducing the voltage of the clock signal line comprises: reducing the voltage of the clock signal line to a level higher than the threshold voltage of the high level.

7. A verification response method for a consumable chip, comprising:
receiving, by a consumable chip, a verification instruction;
Wherein,
determining a verification time period of a verification response signal according to the verification instruction, and determining a verification level of each verification time period, wherein,
the verification time period comprises two groups of verification time periods, a first group of verification time periods is located in a first response cycle, a second group of verification time periods is located in a second response cycle, an initial verification level in the first group of verification time periods is a low-level signal, an initial verification level in a first verification time period of the second group of verification time periods is a high-level signal, and an initial verification level in a second verification time period of the second group of verification time periods is a low-level signal; and
the method comprises: outputting the high-level signal in half a clock cycle before the first group of verification time periods, outputting the low-level signal or a high-impedance state in the first group of verification time periods, outputting the high-level signal in the first verification time period of the second group of verification time periods, and outputting the low-level signal or the high-impedance state in the second verification time period of the second group of verification time periods.

8. The verification response method for the consumable chip according to claim 7, wherein,
a time period of the first group of verification time periods in the first response cycle matches a time period of the second verification time period of the second group of verification time periods in the second response cycle.

9. The verification response method for the consumable chip according to claim 8, wherein,
the method comprises: a level signal output in the first response cycle is the same as a level signal output in the second response cycle.

10. A verification response method for a consumable chip, comprising:
receiving, by a consumable chip, a verification instruction;
wherein,
determining a verification time period of a verification response signal according to the verification instruction, and determining a verification level of each verification time period, wherein
the verification time period comprises two groups of verification time periods, a first group of verification time periods is located in a first response cycle, a second group of verification time periods is located in a second response cycle, an initial verification level in the first group of verification time periods is a low-level signal, an initial verification level in a first verification time period of the second group of verification time periods is a high-level signal, and an initial verification level in a second verification time period of the second group of verification time periods is a low-level signal; and
the method comprises: after a first clock cycle of the second response cycle, outputting the high-level signal to a data signal line before the first verification time period of the second group of verification time periods arrives, and enabling a voltage of the data signal line to be maintained, in the first verification time period of the second group of verification time periods, above a threshold voltage determined as a high level.

11. The verification response method for the consumable chip according to claim 10, wherein,
after the first clock cycle of the second response cycle, the high-level signal is continuously output to the data signal line before the first verification time period of the second group of verification time periods arrives, until an end moment of the second verification time period of the second group of verification time periods.

12. The verification response method for the consumable chip according to claim 10, wherein,
after the first clock cycle of the second response cycle, the high-level signal is output to the data signal line, and before the first verification time period of the second group of verification time periods arrives, the data signal line is set to a high-impedance state, until an arrival moment of the second verification time period of the second group of verification time periods.

13. The verification response method for the consumable chip according to claim 10, wherein,
after the first clock cycle of the second response cycle, the high-level signal is output to the data signal line, and before the first verification time period of the second group of verification time periods arrives, the data signal line is set to a high-impedance state, until the second verification time period of the second group of verification time periods ends.

14. A verification method for a consumable container, comprising:
sending, by a printing device, a verification instruction to at least one consumable container;
**characterized in that**,
after receiving the verification instruction, performing, by a consumable chip of the consumable container, the verification response method for the consumable chip according to any one of claims 1 to 13; and
after receiving a verification response signal sent by the consumable chip, determining, by the printing device, a status of the consumable container according to the received verification response signal.

15. The verification method for the consumable container according to claim 14, wherein
there are at least two containers, and corresponding verification time periods in response cycles corresponding to the consumable chips are different.
